# EUROPEAN PATENT SPECIFICATION

(11) **EP 1 576 801 B1**
(45) Date of publication and mention of the grant of the patent: **12.12.2007**
(21) Application number: 03768249.9
(22) Date of filing: 25.12.2003
(51) Int. Cl.: H04N 1/21

(54) **DATA FILE STORAGE DEVICE, DATA FILE STORAGE PROGRAM AND DATA FILE STORAGE METHOD**
DATEISPEICHERBAUSTEIN, DATEISPEICHERPROGRAMM UND DATEISPEICHERVERFAHREN
DISPOSITIF, PROGRAMME ET PROCEDE POUR STOCKER UN FICHIER DE DONNEES

(30) Priority: 25.12.2002 JP 2002374737; 28.11.2003 JP 2003398265
(43) Date of publication of application: 21.09.2005
(73) Proprietor: CASIO COMPUTER CO., LTD., Shibuya-ku, Tokyo 151-8543 (JP)
(72) Inventor: WATANABE, Akira, Hanno-shi, Saitama 357-0034 (JP); SHINDO, Masahiro, Tachikawa-shi, Tokyo 190-0034 (JP)
(74) Representative: Grünecker, Kinkeldey, Stockmair & Schwanhäusser Anwaltssozietät
(86) International application number: PCT/JP2003/016764
(87) International publication number: WO 2004/059966

(56) References cited:
- PATENT ABSTRACTS OF JAPAN vol. 2000, no. 26, 1 July 2002 (2002-07-01) & JP 2001 243199 A (HITACHI LTD), 7 September 2001 (2001-09-07)
- PATENT ABSTRACTS OF JAPAN vol. 1999, no. 10, 31 August 1999 (1999-08-31) & JP 11 136608 A (NIKON CORP), 21 May 1999 (1999-05-21)
- PATENT ABSTRACTS OF JAPAN vol. 2000, no. 05, 14 September 2000 (2000-09-14) & JP 2000 035908 A (NEC CORP), 2 February 2000 (2000-02-02) cited in the application
- PATENT ABSTRACTS OF JAPAN vol. 1996, no. 08, 30 August 1996 (1996-08-30) & JP 08 110911 A (CANON INC), 30 April 1996 (1996-04-30)
- PATENT ABSTRACTS OF JAPAN vol. 2000, no. 19, 5 June 2001 (2001-06-05) & JP 2001 043240 A (CANON INC), 16 February 2001 (2001-02-16)

## Description

The present invention relates to a data file storage device, a program storing medium and a data file storage method, for storing data files such as image files.

Recently, among portable equipment such as portable telephones and PDAs (personal digital assistants) with schedule management functions that may store users' schedule, there are some that are being developed with built-in image pickup functions such as with digital cameras or movie cameras, and there are some that are being developed in the opposite configuration, where the schedule management functions are built-in in digital cameras.

Conventionally in these cases, filenames with serial numbers assigned, such as "0001.jpg," or filenames of random character strings are automatically set for image files of picked-up pictures (or text files); alternatively, filenames in which a plurality of character data, such as "980310-suzukitaro-003.jpg," in which a date "980310," a user name "Suzuki Taro," and a serial number "003," are combined are automatically set (see Japanese Laid-open Patent Application 2000-35908).

However, the conventional technology entails the following problems.

Filenames composed of dates, serial numbers and/or user names are automatically created without any regard for the contents of data files. Consequently, when a user attempts to search for a specific data file from among numerous data files stored in advance, the user has to directly open each data file to check the contents, which is inconvenient. For example, when a user attempts to select only image files of pictures that are picked up at an athletic event from among numerous image files stored in a built-in memory or a memory card of a portable telephone, a PDA or a digital camera (or a computer's hard disk), the user must directly open each of the numerous image files stored in the built-in memory (or memory card) of the digital camera or the computer's hard disk to check the contents.

Under these circumstances, a variety of technologies have been devised to input information (titles of pictures) indicating as to in which events the pictures currently being accessed are taken and add the information to the pictures.

However, unless the user inputs titles for pictures immediately after the pictures are taken, the user may soon forget in which events the pictures are taken; and, when titles are eventually inputted for the pictures all together after the events are finished, the user need to open the image files one by one to directly confirm the contents of the files, which may be inconvenient.

JP-A-2001/243 199 describes an information processing device. A file name of a voice file is set based on schedule data associated with the date and time when the voice file is to be recorded.

JP-A-11/136 608 describes a digital camera. A file name for recording data is determined based on date and time.

A computer automatically assigning a file name to a user created file is described in JP-A-2000/035 908.

JP-A-8/110 911 describes an information device recording data of images while performing an image pick up operation.

JP-A-2001/43 240 describes an information processing device. The device associates a digital image and the schedule data with each other.

It is the object of the present invention to provide an enhanced arrangement of newly created data files.

This is achieved by the features of the independent claims.

According to another embodiment of the invention, the data file storage device further comprises counter value output means for outputting a different counter value for each filename and/or folder name, and wherein the name setting means sets the filename and/or folder name by using a character string that contains both the character string indicating the contents of the schedule data obtained through the schedule acquisition means and a character string indicating a counter value outputted from the counter value output means.

According to still another embodiment of the invention, the name setting means sets the filename and/or folder name through obtaining and using a designated part of the character string that indicates the contents of the schedule data obtained by the schedule acquisition means.

According to still another embodiment of the invention, the name setting means sets the filename and/or folder name through obtaining and using a designated part of the character string that indicates the contents of the schedule data obtained by the schedule acquisition means.

According to still another embodiment of the invention, the data file storage device further comprises instruction input request means for requesting an instruction input regarding whether or not a character string indicating the content of the schedule data that was obtained by the schedule acquisition means is used as the filename and/or folder name.

According to still another embodiment of the invention, the data file storage device further comprises instruction input request means for requesting an instruction input regarding whether or not to a character string indicating the content of the schedule data that was obtained through the schedule acquisition means is used as the filename and/or folder name.

According to still another embodiment of the invention, the data file storage device further comprises selection input request means for requesting, when a plurality of schedule data whose dates and times include the file creation date and time are obtained by the schedule acquisition means, a selection input regarding which of the plurality of schedule data be selected, and wherein the name setting means sets the filename and/or folder name by using schedule data selected and inputted in response to a request from the selection input request means.

According to still another embodiment of the invention, the data file storage device further comprises selection input request means for requesting, when a plurality of schedule data whose dates and times include the file creation date and time are obtained by the schedule acquisition means, a selection input regarding which of the plurality of schedule data be selected, and wherein the name setting means sets the filename and/or folder name by using schedule data selected and inputted in response to a request from the selection input request means.

According to still another embodiment of the invention, the schedule acquisition means, if there is no schedule data among the schedule data stored in the schedule data storage means whose schedule date and time include the file creation date and time obtained by the file creation date and time acquisition.means, obtains schedule data whose date and time are closest to the file creation date and time.

According to still another embodiment of the invention, the schedule acquisition means, if there is no schedule data among the schedule data stored in the schedule data storage means whose schedule date and time include the file creation date and time obtained by the file creation date and time acquisition means, obtains schedule data whose date and time are closest to the file creation date and time.

According to still another embodiment of the invention, the schedule acquisition means, if there is no schedule data among the schedule data stored in the schedule data storage means whose schedule date and time include the file creation date and time obtained by the file creation date and time acquisition means, obtains immediately preceding schedule data whose date and time are before the file creation date and time and closest to the file creation date and time, as well as immediately succeeding schedule data whose date and time are after the file creation date and time and closest to the file creation date and time; and the name setting means sets a filename of the data file to be stored in the data file storage means and/or the folder name of the file folder that stores the data file, using data of either the immediately preceding schedule data or the immediately succeeding schedule data.

According to still another embodiment of the invention, the schedule acquisition means, if there is no schedule data among the schedule data stored in the schedule data storage means whose schedule date and time include the file creation date and time obtained by the file creation date and time acquisition means, obtains preceding schedule data whose date and time are before the file creation date and time and closest to the file creation date and time, as well as succeeding schedule data whose date and time are after the file creation date and time and closest to the file creation date and time; and the name setting means sets a filename of the data file to be stored in the data file storage means and/or the folder name of the file folder that stores the data file, using data of either the preceding schedule data or the succeeding schedule data.

According to still another embodiment of the invention, the data file storage device further comprises time difference data acquisition means for obtaining time difference data for a designated geographical area, and file creation date and time correction means for correcting the file creation date and time based on the time difference data obtained by the time difference data acquisition means, and wherein the schedule acquisition means obtains schedule data based on the file creation date and time corrected by the file creation date and time correction means.

According to still another embodiment of the invention, the data file storage device is a digital camera with imaging means, and wherein, for a file of an imaged picture that is picked up by the imaging means as the data file, a part or all of a character string indicating the contents of the schedule data obtained by the schedule acquisition means is used to set the filename of the data file to be stored in the data file storage means and/or the folder name of a file folder that stores the data file.

According to still another embodiment of the invention, the data file storage device is a portable telephone with imaging means, and wherein, for a file of an imaged picture that is picked up by the imaging means as the data file, a part or all of a character string indicating the content of the schedule data obtained by the schedule acquisition means is used to set the filename of the data file to be stored in the data file storage means and/or the folder name of the file folder that stores the data file.

According to still another embodiment of the invention, the data file storage device is a PDA device with imaging means, and wherein, for a file of an imaged picture that is picked up by the imaging means as the data file, a part or all of a character string indicating the content of the schedule data obtained by the schedule acquisition means is used to set the filename of the data file to be stored in the data file storage means and/or the folder name of the file folder that stores the data file.

According to still another embodiment of the invention, the data file storage means is a file server connected via a network.

According to still another embodiment of the invention, the schedule data storage means is a schedule management storage server connected via a network.

Additional objects and advantages of the present invention will be set forth in the description which follows, and in part will be obvious from the description, or may be learned by practice of the present invention.

The objects and advantages of the present invention may be realized and obtained by means of the instrumentalities and combinations particularly pointed out hereinafter.

The accompanying drawings, which are incorporated in and constitute a part of the specification, illustrate presently preferred embodiments of the present invention and, together with the general description given above and the detailed description of the preferred embodiments given below, serve to explain the principles of the present invention in which:
FIG. 1 is a block diagram of an internal configuration of a data file storage device according to a first embodiment of the present invention;
FIGS. 2A, 2B and 2C are specific examples of electronic equipments to which a data file storage device according to the embodiment is applied;
FIG. 3 is an example in which a part or all of a storage section according to the embodiment is realized by a server connected to a network;
FIG. 4 is a flowchart for describing a data file storage processing;
FIG. 5 is a flowchart for describing a filename/folder name creation processing;
FIG. 6 is a flowchart for describing a processing according to a second embodiment;
FIG. 7 is a flowchart for describing a processing according to a third embodiment;
FIG. 8 is a flowchart for describing a processing according to a fourth embodiment;
FIG. 9 is a flowchart for describing a processing according to a fifth embodiment;
FIG. 10 is a flowchart for describing a processing for storing schedule data in a data file according to a sixth embodiment; and
FIG. 11 is a flowchart for describing a processing according to seventh embodiment in which a data file that stores schedule data is transmitted through communications means, and information thereof is used on another independent terminal.

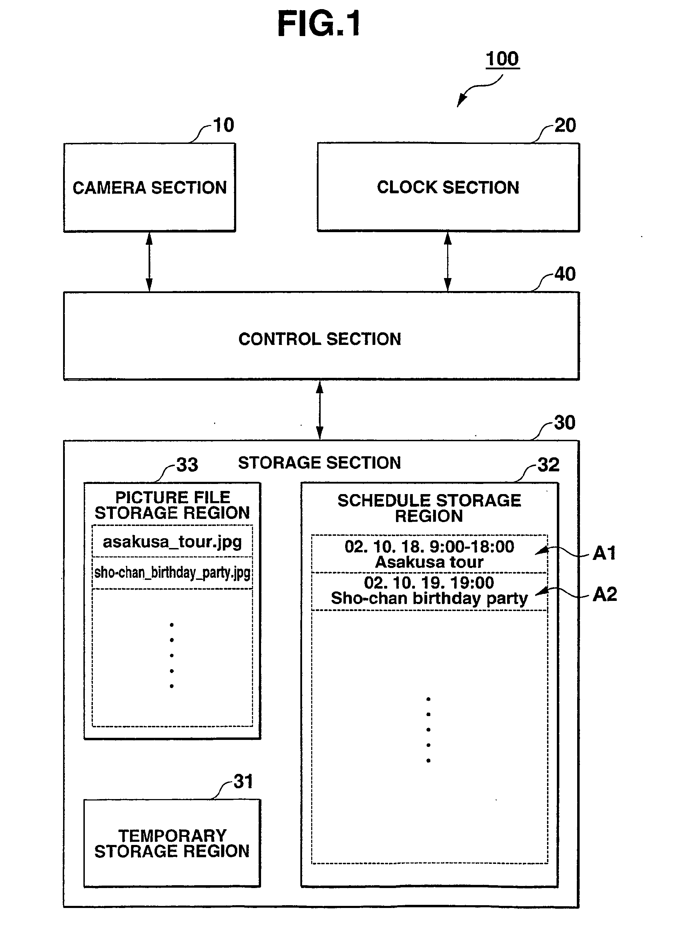

Referring to FIGS. 1 to 11, a data file storage device 100 to which the present invention is applied will be described in detail.

The data file storage device 100 is provided with a schedule management function for storing schedules, as well as an image pickup function.

### First Embodiment:

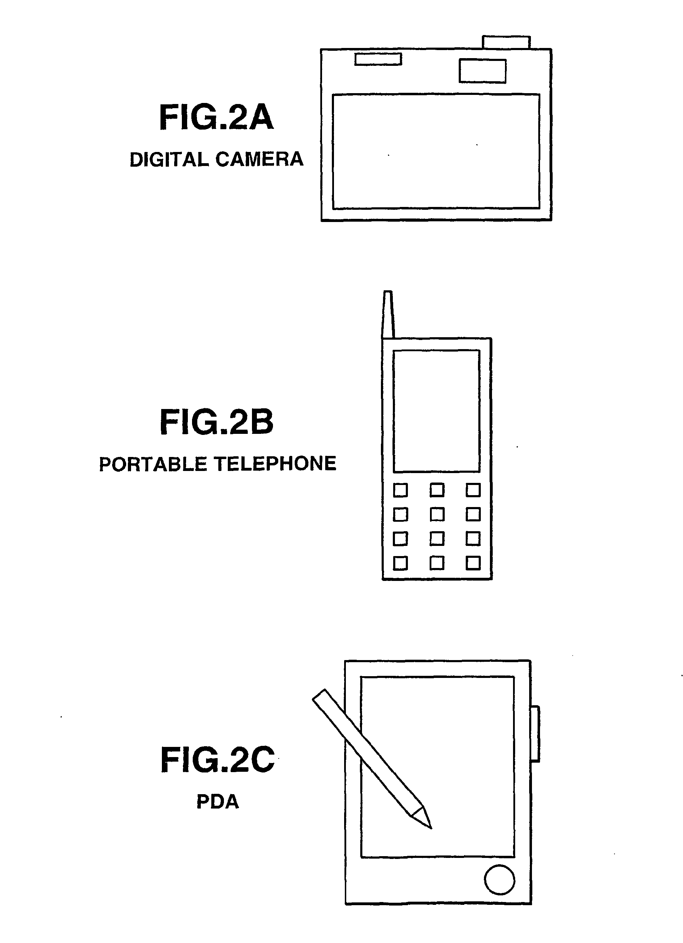

First, a configuration of the data file storage device 100 will be described. FIG. 1 shows an internal configuration of the data file storage device 100. Specifically, the data file storage device 100 in FIG. 1 may be applied to, for example, a digital camera as shown in FIG. 2A, a portable telephone as shown in FIG. 2B, or a PDA as shown in FIG. 2C.

As shown in FIG. 1, the data file storage device 100 comprises a camera section 10, a clock section 20, a storage section 30, and a control section 40.

The camera section 10 creates image files of imaged pictures that are picked up, and the clock section 10 measures the current time.

The storage section 30 has a plurality of storage regions, such as a temporary storage region 31, a schedule storage region 32, and a picture file storage region 33. The temporary storage region 31 temporarily stores image files created by the camera section 10; the schedule storage region 32 stores schedule data inputted in advance (hereinafter sometimes called "schedules registered in advance"); and the file storage region 33 stores image files for which filenames created by the control section 40 are set, as well as image files in file folders for which folder names are set by the control section 40.

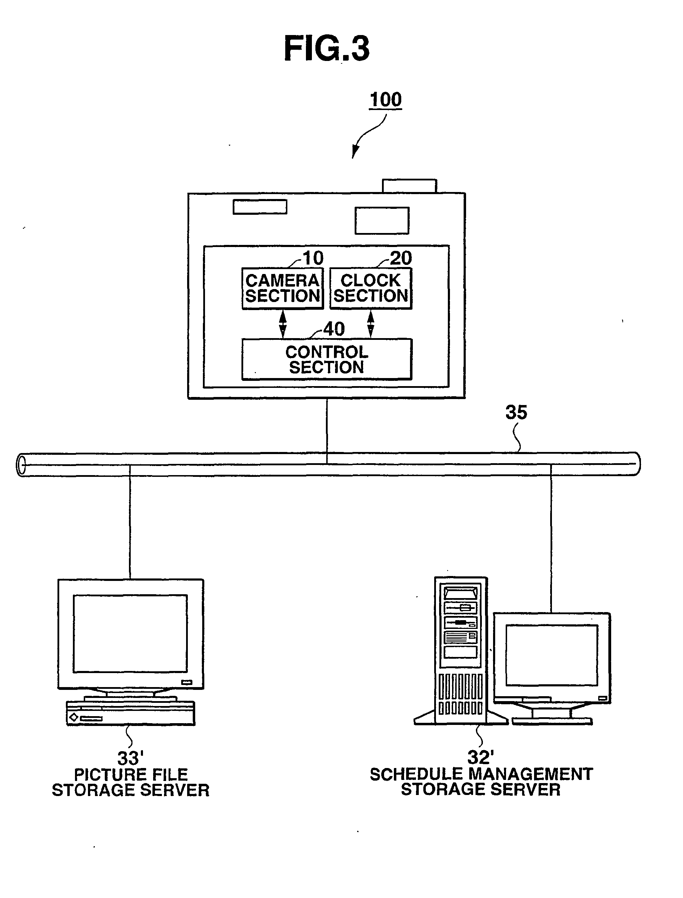

As shown in FIG. 3, of the internal components of the data file storage device 100 according to the present invention, all storage regions of the storage section 30 or a part of storage regions of the storage section 30, e.g., the picture file storage region 33 or the schedule storage region 32, may be connected for communications via a network such as a bus 35. For example, the storage section 30 may have a nonvolatile memory such as magnetic or optical recording media or semiconductor, and such recording media may be either fixed or mounted in a freely detachable manner. A part or all of programs and data stored in the storage section 30 may be received from other equipment via a communications network such as WAN (wide area network) or LAN (local area network) and stored. Furthermore, the recording media may be recording media of other host computers constructed on the communications network. The storage section 30 may be recording media of a server or a client constructed on the communications network. In other words, for example, the picture file storage region 33 may be provided on a file server connected via a network, or the schedule storage region 32 may exist in a storage section of a desktop PC connected via USB, for example, such that the digital camera or the portable telephone according to the present invention receives schedule data from the desktop PC to execute the present invention.

Each schedule data consists of data such as a character string indicating date and time and contents of the corresponding schedule.

For example, as shown in FIG. 1, among a plurality of schedule data stored in the schedule storage region 32, one schedule data (see A1 in FIG. 1) comprises a character string that indicates date and time "02. 10. 18. 9:00 -18:00" and contents "Asakusa tour" (i.e., a schedule indicating being in Asakusa from 9 o'clock to 18 o'clock on October 18, 2002), while another schedule data (see A2 in FIG. 1) comprises a character string that indicates date and time "02. 10. 19. 19: 00" and contents "Sho-chan birthday party" (i.e., schedule data indicating attendance at Sho-chan's birthday party at 19 o'clock on October 19, 2002).

Hereinafter, character string data that indicate schedule contents are called "schedule character data."

Filenames are, as shown in FIG. 1, "asakusa_tour.jpg" (a picture file that corresponds to the schedule indicated in A1) and "sho-chan_birthday_party.jpg" (a picture file that corresponds to the schedule indicated in A2), for example, that are stored in the picture file storage region 33, and folder names are "Asakusa tour" and "Sho-chan birthday party," for example. These filenames and folder names have been created and named through a filename/folder name creation processing described below.

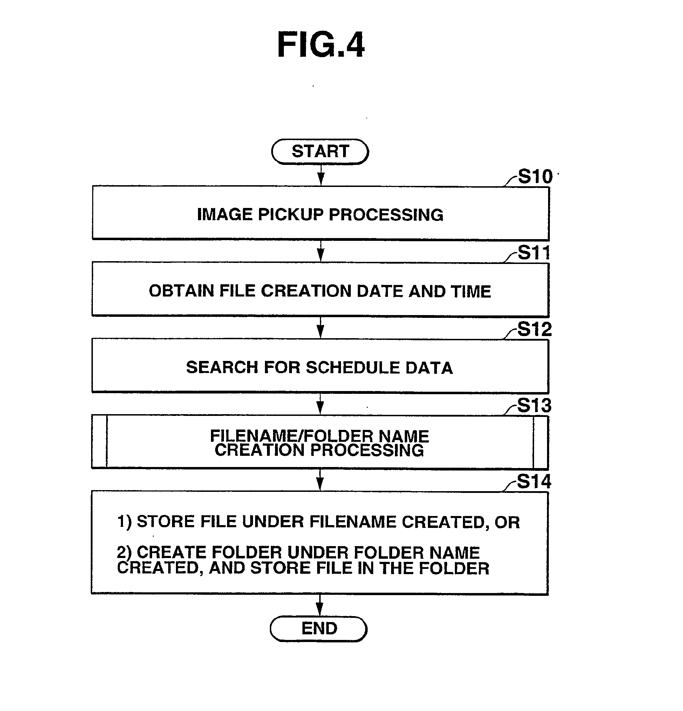

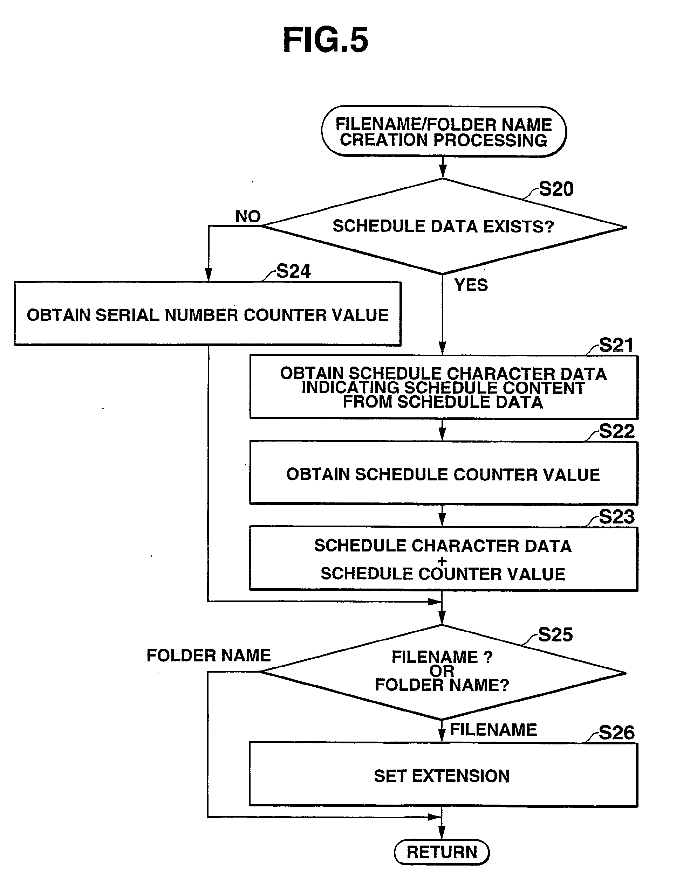

The storage section 30 stores computer-readable data file storage programs for executing a data file storage processing and the filename/folder name creation processing that are indicated in flowcharts in FIG. 4 and FIG. 5, respectively.

The control section 40 stores a user's schedule in the schedule storage region 32 and searches and reads the same from the schedule storage region 32 as necessary. The schedule data may be inputted or erased, as necessary.

The control section 40 reads the data file storage program from the storage section 30 and executes the program (see flowcharts in FIGS. 4 and 5).

In other words, when the camera section 10 picks up a picture, the control section 40 obtains image pickup date and time (i.e., the date and time a picture file was created; hereinafter called the "file creation date and time") from the clock section 20 by executing the data file storage program, and searches schedule data stored in the schedule storage region 32 for schedules whose dates and times include the file creation date and time obtained (hereinafter called "schedule(s) that match(es) the file creation date and time").

If there is a schedule that matches the file creation date and time in the schedule data stored in the schedule storage region 32, the control section 40 obtains a part or all of the corresponding schedule character data (e.g., "Sho-chan birthday party" or simply "Birthday party"; hereinafter called the "schedule part data"), as well as a schedule counter value for counting image files for each schedule (e.g., a four-digit natural number such as "0003," but not limited to this), and creates a filename or a folder name based on the schedule part data or creates a filename or a folder name based on a combination of character data indicating the schedule counter value and the schedule part data.

An example of such a filename would be "sho-chan_birthday_party_0003.jpg" and an example of such a folder name would be "sho-chan birthday party."

If there is no schedule in the entire schedule data stored in the schedule storage region 32 that matches the file creation date and time, the control section 40 obtains a serial number counter value (e.g., a five-digit natural number such as "00055," but not limited to this) for counting image files such as this that do not match any schedule, and creates a filename and/or a folder name based on character data indicating the serial number counter value.

An example of such a filename would be "00055.jpg" and an example of such a folder name would be "00055."

The control section 40 performs management processing, such as initializing and incrementing the schedule counter for each schedule, and performs similar management processing on the serial number counter. In particular, the control section 40 increments the counter value by only one whenever it obtains the schedule counter value or the serial number counter value.

Next, the operation of the data file storage device 100 will be described. FIG. 4 shows a flowchart for describing the data file storage processing.

First, the camera section 10 performs an image pickup processing; when a picture file of an imaged picture picked up is created, the control section 40 temporarily stores the picture file in the temporary storage region 31 and begins to execute the data file storage program (step S10).

After step S10, the control section 40 obtains the file creation date and time of the picture file from the clock section 20 (step S11), and searches among the schedule data stored in the schedule storage region 32 for the schedule data that matches the file creation date and time (step S12).

After step S12, the control section 40 performs the filename/folder name creation processing shown in the flowchart in FIG. 5 and creates a filename for the picture file and/or a folder name for storing the picture file (step S13).

Next, if a filename is created in step S13, the control section 40 assigns the filename to the picture file and stores it in the picture file storage region 33. On the other hand, if a folder name is created in step S13, the control section 40 assigns a predetermined filename (e.g., a filename set in the filename/folder name setting processing in step S13) to the picture file and stores the same in the file folder with the folder name.

Next, the filename/folder name creation processing in step S13 in FIG. 4 will be described. The flowchart for describing the filename/folder name creation processing is shown in FIG. 5. First, a description will be made as to a situation in which there is only one schedule data that matches the file creation date and time.

If there is only one schedule data that matches the file creation date and time obtained in step S11 among the schedule data stored in the schedule storage region 32 (step S20: Yes) (a situation in which there are two or more is described later), the control section 40 obtains schedule character data that indicates the schedule contents from the schedule data that matches (step S21).

For example, if the schedule data that matches the file creation date and time is data indicated by A2 in FIG. 1, the schedule character data that indicates the contents of the schedule is "Sho-chan birthday party."

After step S21, the control section 40 searches for and obtains a schedule counter value that corresponds to the schedule obtained in step S21 (step S22). If there is no schedule counter that corresponds to the schedule obtained in step S21, the control section 40 judges the file to be the first file processed during the period of the schedule; accordingly, the control section 40 clears the schedule counter value for the schedule data and sets it to "000," for example.

The character data indicating the schedule counter value and the schedule character data obtained in step S21 are combined to create new character data to be used as a filename or a folder name (step S23).

For example, if the schedule character data obtained in step S21 is "Sho-chan birthday party" and the schedule counter value obtained in step S22 is "0003," the character data resulting from combining the schedule character data and the character data indicating the schedule counter value is "Sho-chan birthday party 0003."

Let us return to step S20. If there is no schedule that matches the file creation date and time obtained in step S11 among all schedule data stored in the schedule storage region 32 (step S20: No), the control section 40 obtains a serial number counter value (e.g., "00055") as character data for creating a filename or a folder name (step S24). Instead of using the serial number counter, other known technology may be used, such as using date or time to obtain character data, for example, to automatically create filenames/folder names.

Next, the control section 40 requests a selection input regarding whether a filename or a folder name is to be created from the character data obtained in step S23 or step S24 (e.g., "Sho-chan birthday party 0003" or "00055") (step S25).

If a selection input to create a filename is made in step S25 (step S25: filename), the control section 40 attaches to the character data an extension appropriate for the file format of the picture file (e.g., JPEG) (step S26) and sets a filename ("sho-chan_birthday_party_0003.jpg" or "00055.jpg"). If a selection input to create a folder name is made (step S25: folder name), the character data is set unaltered as a folder name (e.g., "Sho-chan birthday party 0003" or "00055").

Although the user makes a selection input regarding whether to set the character data as a filename or a folder name in step S25, the selection may be made automatically by the program using the method described below.

For example, if a schedule counter may not be found in step S22, i.e., no image files picked up for the schedule obtained in step S21 have been stored so far, the schedule counter value is cleared and a file folder whose folder name is the schedule character data that indicates the contents of the schedule is created in a predetermined storage region. The picked up picture file, whose filename is a character string that combines the schedule character data and the schedule counter value, is stored in the folder created. Thereafter, whenever the same schedule is obtained in step S21, a file of each picked up picture is stored in the folder.

More specifically, when the schedule character data "Sho-chan birthday party" is obtained for the first time, a folder with the name "Sho-chan birthday party" is created, and the picked up picture data obtained at this time is stored under the filename "sho-chan_birthday_party_0000.jpg" in the folder "Sho-chan birthday party." Thereafter, files of picked up pictures may be stored according to the following method: whenever the schedule character data "Sho-chan birthday party" is obtained, searching the schedule counter value in step S22 reveals that this is not the first time this schedule has been obtained, and, without having to create a new folder, files or picked up pictures are stored in the folder whose name is the same as the schedule character data.

By so doing, the user feels convenient to operate the device, since there is no need to make a selection input for a filename or a folder name every time a picture is picked up. Furthermore, since files that correspond to one schedule are stored in one folder, there is another advantage in that the files are organized and stored by schedule without the user having to be aware of it.

As described above, according to the embodiment of the data file storage device 100, when assigning a filename to a picture file or a folder name for storing the picture file, a schedule that matches the file creation date and time of the picture file is selected from among schedules registered in advance, and the filename or the folder name is created based on the content of the schedule. As a result, even when the user attempts to obtain a specific picture file from numerous image files stored, the user may refer to filenames or folder names to obtain desired image files without having to directly check the contents of image files. Furthermore, since all data that relate to one schedule share a common character string part in their filenames, the files are automatically organized; this makes it easier for the user to manage files and improves convenience.

It is noted that the description of the first embodiment indicates one example of the data file storage device, the data file storage program and the data file storage method according to the present invention. The present invention is not limited to the first embodiment. Many modifications may be made to the configuration details, operational details and numerical values of the data file storage device 100 according to the first embodiment, without departing from the subject matter of the present invention.

For example, the schedule counter and the serial number counter are described as a four-digit natural number and a five-digit natural number, respectively, but they may be natural numbers of any number of digits. Furthermore, they do not have to be natural numbers and may instead be alphabets ("a," "b," etc.) or Japanese characters ("λ", "□," etc.), and they may be either full-size or half-size characters. In other words, anything may be used as long as it distinguishes each filename and each folder name.

Other embodiments of the present invention will be described. The same portions as those of the first embodiment will be indicated in the same reference numerals and their detailed description will be omitted.

### Second Embodiment

Next, a description will be made as to a filename/folder name creation processing, in which the user may select from among filenames/folder names that are based on a plurality of schedule data that match a file creation date and time among schedules registered in advance, and filenames/folder names based on serial number counter values. According to a second embodiment, filename or folder name candidates are created based on various schedule data or serial number counter values, and the user selects which of the plurality of candidates should ultimately be used as a filename or a folder name. An example in which such a processing takes place is described below in the second embodiment.

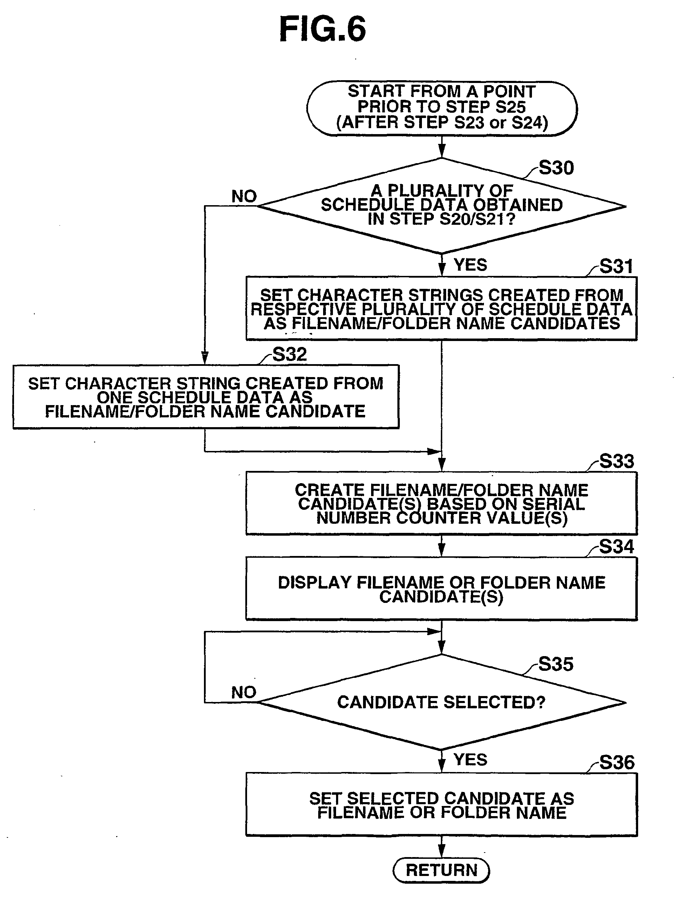

In the second embodiment, a processing indicated in a flowchart in FIG. 6 is added to the filename/folder name creation processing shown in the flowchart in FIG. 5. In other words, in a data file storage program according to the second embodiment, a program for performing the processing shown in the flowchart in FIG. 6 is added to the data file storage program according to the first embodiment and changes that are required accordingly are made as necessary to the program indicated by the flowchart in FIG. 5.

A data file storage device according to the second embodiment is identical to the data file storage device 100 according to the first embodiment.

The following is a description of processing contents of the flowchart in FIG. 6.

First, the control section 40 proceeds the process to processings according to the flowchart in FIG. 6 from a point prior to step S25 (in other words, after step S23 or S24) in FIG. 5.

After step S23 or S24, the control section 40 determines whether a plurality of schedule data are obtained in steps S20 and S21 in FIG. 5 (step S30). If there is a plurality of schedule data obtained (step S30: Yes), character strings created from the schedule character data of the respective plurality of schedule data are set as filename/folder name candidates, respectively (step S31). If there is only one schedule data obtained (step S30: No), the character string created from schedule character data of the schedule data is set as a filename/folder name candidate (step S32).

After step S31 or S32, the control section 40 additionally creates filename/folder name candidate(s) based on serial number counter value(s) (step S33).

Then, the control section 40 displays on a display screen, not shown, the filename/folder name candidate(s) created in step S31 or S32 and step S33 (step S34); requests a selection input regarding which one among all the candidates should be used as a filename or a folder name (step S35); and sets as the filename or the folder name the candidate selected in response to the request (step S36).

As a result, according to the second embodiment, even if there are two or more schedules that match the file creation date and time in the schedules registered in advance, due to the fact that a filename or a folder name is created for each of the plurality of schedules and that the user may select the desired filename/folder name from among them, schedule data that is appropriate for each data file may be used as a filename/folder name, which is convenient.

In this case, a flag that indicates whether or not to use the schedule contents as a filename or a folder name (settings such as ON: use, OFF: do not use) may be provided for each schedule data. By doing this, even if there is a plurality of schedules that match the file creation date and time, filenames or folder names would be created only for schedules whose flags are ON and unnecessary filenames or folder names would not be created, which is efficient.

In addition to filenames or folder names based on schedule contents, filenames or folder names based on serial number counter values (e.g., "00055") may also be created. Consequently, if there is a schedule that matches the file creation date and time of a picture file but if the picture file is unrelated to the schedule, the user may set a filename or a folder name that is created based on the serial number counter value.

### Third Embodiment

Furthermore, a part or all of the character string indicated by the schedule character data obtained in step S21 in FIG. 5 may be selected by the user, and a filename or a folder name may be created based on the character string data selected. An example in which such a processing takes place is shown in the following third embodiment.

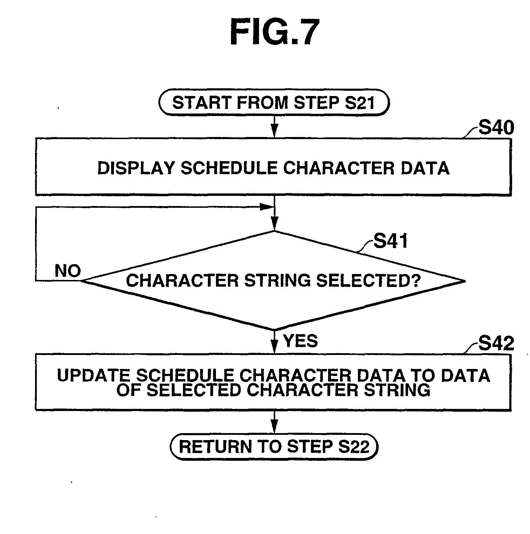

In this case, a processing indicated in a flowchart in FIG. 7 is added to the filename/folder name creation processing shown in the flowchart in FIG. 5. In other words, in a data file storage program according to the third embodiment, a program for performing the processing shown in the flowchart in FIG. 7 is added to the data file storage program according to the first embodiment and changes that are required accordingly are made as necessary to the program indicated by the flowchart in FIG. 5.

A data file storage device according to the third embodiment is identical to the data file storage device 100 according to the first embodiment.

The following is a description of processing content of the flowchart in FIG. 7.

First, the control section 40 displays on the display screen the schedule character data obtained in step S21 (step S40).

Next, the control section 40 requests an instruction input regarding which part of the character string displayed should be selected (step S41). When the instruction input is made (step S41: Yes), the control section 40 updates the original schedule character data to the character string data selected (step S42) and proceeds to step S22 in FIG. 5. In terms of how to make an instruction input regarding which part of the character string should be selected, of the character string displayed, the part of the character string that is selected may be highlighted using a cursor, for example. In step S42, instead of directly updating the original schedule character data, the original schedule character data may be copied to a working memory as a filename candidate character string, and the character string in the working memory may be updated and used as the character string that becomes the basis for creating a filename/folder name.

As a result, according to the third embodiment, if the character string that indicates the schedule contents is too long, the user may select only a part of the entire character string desired to be used as a filename or a folder name, and create a filename or a folder name based on the selected part. For example, if the character string that indicates a schedule contents is "Sho-chan five years old birthday party," this character string is too long to use as a filename or a folder name; the user may select only "birthday" from the entire character string and create a filename or a folder name based on the character string "birthday" (for example, "birthday_01.jpg" as a filename, "birthday" as a folder name). Furthermore, a plurality of parts from a character string may be made selectable according to the third embodiment, so that a filename/folder name may be created by combining a plurality of partial character strings selected. By doing this, for example, a partial character string "Sho-chan" and a partial character string "birthday" may be combined in the example above in order to use a character string "Sho-chan birthday" as a filename/folder name, which further enhances convenience.

### Fourth Embodiment:

Furthermore, even in situations in which there is no schedule that directly matches the file creation date and time in the processing that takes place in step S12 through step S13 in FIG. 4, one schedule among a plurality of schedules that are registered in times in proximity of the file creation date and time may be selected, or a schedule whose time is closest to the file creation date and time may be automatically selected. An example in which such a processing takes place is indicated in the following Fourth embodiment.

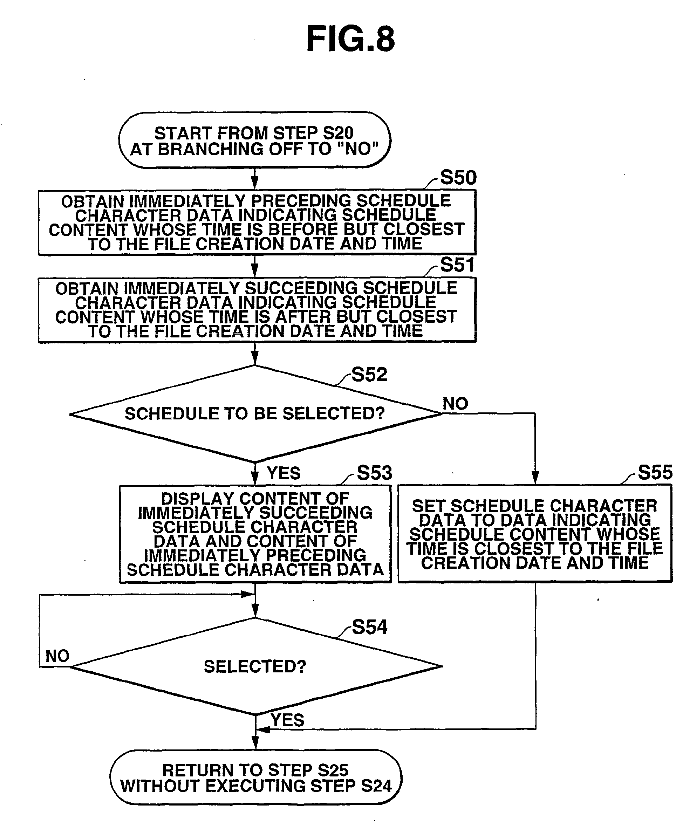

In this case, a processing indicated in a flowchart in FIG. 8 is added to the processing shown in the flowchart in FIG. 5. In other words, in a data file storage program according to the fourth embodiment, a program for performing the processing shown in the flowchart in FIG. 8 is added to the data file storage program according to the first embodiment and changes that are required accordingly are made as necessary to the program indicated by the flowchart in FIG. 5.

A data file storage device according to the fourth embodiment is identical to the data file storage device 100 according to the first embodiment.

The following is a description of processing contents of the flowchart in FIG. 8.

First, if there is no schedule that matches the file creation date and time in step S20 (step S20: No), the control section 40 selects from among schedule data stored in the schedule storage region 32 a schedule whose time is before but closest to the file creation date and time, and obtains schedule character data that represents the contents of the schedule (hereinafter called the "immediately preceding schedule character data") (step S50).

Further, the control section 40 selects from among schedule data stored in the schedule storage region 32 a schedule whose time is after but closest to the file creation date and time, and obtains schedule character data that represents the contents of the schedule selected (hereinafter called the "immediately succeeding schedule character data") (step S51).

Then, the control section 40 requests an instruction input regarding whether to have the user select the data of one of the immediately preceding schedule character data and the immediately succeeding schedule character data, or to have the schedule character data of the schedule closest to the file creation date and time automatically selected (step S52). How to decide which method to use, i.e., to have the user select or to have the selection automatically made, regarding which schedule character data to use may be set in advance, in which case no instruction input would be required, or a setting may be made at the time the equipment ships out of the factory so that only one method may be executed (in the latter case, both processing programs naturally do not have to be stored in the device main body).

If in step S52, there is an instruction input to have the user select either the immediately preceding schedule character data or the immediately succeeding schedule character data (step S52: Yes), the control section 40 displays on the display screen the contents represented by the immediately preceding schedule character data and the contents represented by the immediately succeeding schedule character data (step S53).

Next, the control section 40 requests an instruction input regarding which of the immediately preceding schedule character data and the immediately succeeding schedule character data should be selected (step S54); when one or the other is selected (step S54: Yes), the control section 40 proceeds to step S25. In this case, the control section 40 does not perform the processing in step S24.

After branching off step S54 to "Yes", a processing similar to the processing that takes place in step S22 and step S23 may be performed additionally. By so doing, character data resulting from combining schedule character data with character data indicated by a schedule counter value (e.g., "Asakusa tour 0001") may be set as a filename and/or folder name also in the fourth embodiment.

Although only schedules that are set in times before and after and closest to the file creation date and time are extracted for the user to select from according to the fourth embodiment, a plurality of schedules both before and after may be extracted and the user may select a character string to use as a filename/folder name from among four, six, etc. schedule character data. Alternatively, all schedules that are within a predetermined time range, whose reference is the file creation date and time, may be extracted and the user may select a character string to use as a filename/folder name from among the schedules.

As a result, according to the fourth embodiment, if no schedule that matches the file creation date and time is registered, the user may select one content from among contents of schedules that are registered in times close to the file creation date and time and create a filename or a folder name based on the content selected. Alternatively, the schedule whose time is closest to the file creation date and time may be automatically selected and a filename or a folder name may be created based on the content of the schedule selected. In other words, even in situations where the date and time of a schedule have shifted slightly and no longer match the actual file creation date and time, a filename or a folder name based on the contents of the schedule may be easily created.

For example, if the file creation date and time of a picture file is December 18, 22:30 and no schedule that matches this date and time is registered, and if the schedules whose times are before and after but closest to the file creation date and time are a first schedule with the date and time "December 18, 18:00 - 20:00" and the contents "year-end party" and a second schedule with the date and time "December 18, 23:00" and the contents "trip on a night train," the user may select the contents of one or the other of the two schedules, or the second schedule that is closest to the file creation date and time may be automatically selected, in order to create a filename or a folder name for the picture file. Consequently, even if the date and time of a schedule are inaccurate or have shifted slightly for some reason and the file creation date and time do not match the date and time of the schedule registered, a filename or a folder name may be created flexibly.

### Fifth Embodiment

When an image pick up geographical area (i.e., the location where the data file storage device 100 is taken to) registered in a schedule is a foreign country and there is therefore a time difference between the file creation date and time (i.e., the date and time as clocked by the clock section 20) and the date and time of the schedule (as set by the local time), the time difference can be automatically corrected to make it possible for the schedule search (step S12 in FIG. 4) to be performed properly. An example in which such a processing takes place is indicated in the following fifth embodiment.

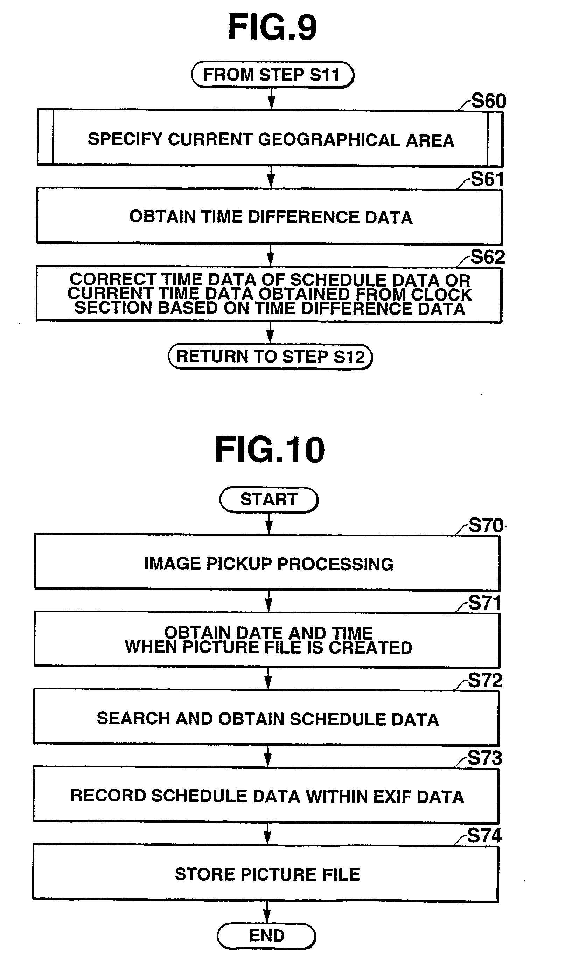

In this case, a processing indicated in a flowchart in FIG. 9 is added to the processing shown in the flowchart in FIG. 4. In other words, in a data file storage program according to the fifth embodiment, a program for performing the processing shown in the flowchart in FIG. 9 is added to the data file storage program according to the first embodiment and changes that are required accordingly are made as necessary to the program indicated by the flowchart in FIG. 4.

A data file storage device according to the fifth embodiment is identical to the data file storage device 100 according to the first embodiment.

The following is a description of processing contents of the flowchart in FIG. 9. In the following description, let us assume that the time setting for schedule data (in this case, data for schedules that take place in a foreign country) stored in the schedule storage region 32 is based on the local time of the foreign country, which is the travel destination.

First, after obtaining the file creation date and time in step S11, the control section 40 specifies the current geographical area of the data file storage device 100 (step S60). In this case, the current geographical area may be specified by the user from among geographical area data stored in advance in the storage section 30, or a GPS may be built-in and used to automatically specify the current geographical area, for example.

Then, the control section 40 obtains time difference data between the time in the current geographical area and the time as clocked by the clock section 20 (i.e., the time in the user's home country or residence area) based on the data indicating the current geographical area specified (step S61), the time difference data may be stored in advance in the storage section 30 for each geographical area registered, or may be obtained from an external storage device as necessary. When travel information (e.g., destination country name or the information with which time zone may be specified) delivery may be received from a travel agency's server, for example, the time difference data may be obtained based on the travel information received by a terminal.

Based on the time difference data obtained, the control section 40 corrects either the time of the schedule data set in the local time or the current time obtained from the clock section 20 (step S62). If it is the time of schedule data set in local time that is corrected, the trouble is that the time set in the local time is corrected to the time in the original home country or the user's residence area. Therefore, it is desirable in step S62 to correct the current time obtained from the clock section 20 (i.e., the time in the home country). The time corrected in this way is used to perform the schedule search processing as shown in FIG. 4 and FIG. 5.

As a result, according to the fifth embodiment, when schedules related to an overseas trip are set in the local time, the time difference that results between this and the time clocked by the clock section 20 may be easily corrected. For example, if a schedule has date and time "December 18, 11:00" and the contents "arrive at airport A," the date and time "December 18, 11:00" are the local date and time (at the airport A); however, the time difference of approximately 10 hours that results between this and the date and time (for example, December 18, 21:00) actually clocked by the clock section 20 may be readily corrected.

### Sixth Embodiment

Further, when the data file storage device 100 is capable of creating image files having EXIF (Exchangeable Image File) data, schedule data (schedule character data or schedule part data; and hereafter the same applies) for the image files may preferably be stored as "image titles" in the EXIF data.

An example that performs the processings described above is indicated in the sixth embodiment. As a data file storage program in the sixth embodiment, a program that performs a process indicated in FIG. 10 is used instead of the program that performs the data file storage process indicated in FIG. 4 (or used selectively with the program relating to FIG. 4).

Also, a data file storage device of the sixth embodiment is equivalent to one in which the data file storage device 100 in the first embodiment is made to handle EXIF (hereafter referred to as a "data file storage device 100a").

Hereunder, the contents of the process indicated in a flowchart in FIG. 10 will be described.

First, when an image pickup processing by the camera section 10 is performed, and a picture file of a picture picked up is created, the control section 40 temporarily stores the picture file in the temporary storage region 31 (step S70).

After step S70, the control section 40 obtains. file creation date and time of the picture file from the clock section 20 (step S71), searches among the schedule data stored in the schedule storage region 32 for schedule data that matches the file creation date and time, and obtains the schedule data that matches the date and time (step S72).

The control section 40 records the schedule data obtained in the stage in step S72 as a "picture title" within EXIF data in the picture file (step S73).

Thereafter, the control section 40 causes the picture file storage region 33 to store the picture file that records the schedule data in its EXIF data (step S74).

It is noted that EXIF data is in a picture file format, that is standardized by JEIDA (Japan Electronic Industry Development Association), and that may embed thumbnail images and data such as image pickup information within picture data in a JPEG picture format. More specifically, it is realized by placing within data in a JPEG format a predetermined one of application markers (punctuation codes representing punctuations of data) reserved for each application, and insert thereafter data in a format that is stipulated by the EXIF standard. When schedule data is embedded within EXIF data as in the present embodiment example, a character string of the schedule data with a tag specified in the EXIF format added thereto may be embedded. In this case, as the tag, for example, an Image Description tag (a tag indicating that a text that describes the picture follows thereafter), which is already specified in the EXIF format, may be used; and schedule data may be placed behind such a tag. Alternatively, a new tag may be defined in a form according to an individual maker's definition, and such a tag may be used. Also, the method to embed information according to the schedule data within the picture file may be realized by any one of a variety of formats, without being limited to the method using the EXIF data format.

Accordingly, in accordance with the sixth embodiment, schedule data relating to files of pictures taken may be recorded as "picture titles" within EXIF data. As a result, by using an image reproduction device such as a PC (personal computer) that may handle EXIF, the contents of the image files may be readily and accurately confirmed from the EXIF data, which is very convenient.

### Seventh Embodiment

Furthermore, a communications terminal with camera function (for example, portable telephone, digital camera, PDA, etc.) may preferably be equipped with the data file storage device 100a that may handle EXIF in the sixth embodiment described above.

Such an example is indicated in the seventh embodiment below. In the seventh embodiment, two communications terminals with camera function that send and receive image files (hereafter referred to as a "first communications terminal 1" and a "second communications terminal 2") are each equipped with the same device as the data file storage device 100a.

It is noted that the first communications terminal 1 and the second communications terminal 2 are portable telephones with camera function; and each of them is equipped with a variety of functions necessary for a portable telephone, such as, a data communications section that sends and receives data, a display section such as an LCD (Liquid Crystal Display) or the like that displays a variety of data contents, an input section for inputting various instructions, etc. However, for the sake of simplification, illustrations of the respective components (except the data file storage device 100a) and their detailed description are omitted. Also, the same reference numbers are assigned to the sections of the data file storage devices 100a for the first communications terminal 1 and the second communications terminal 2.

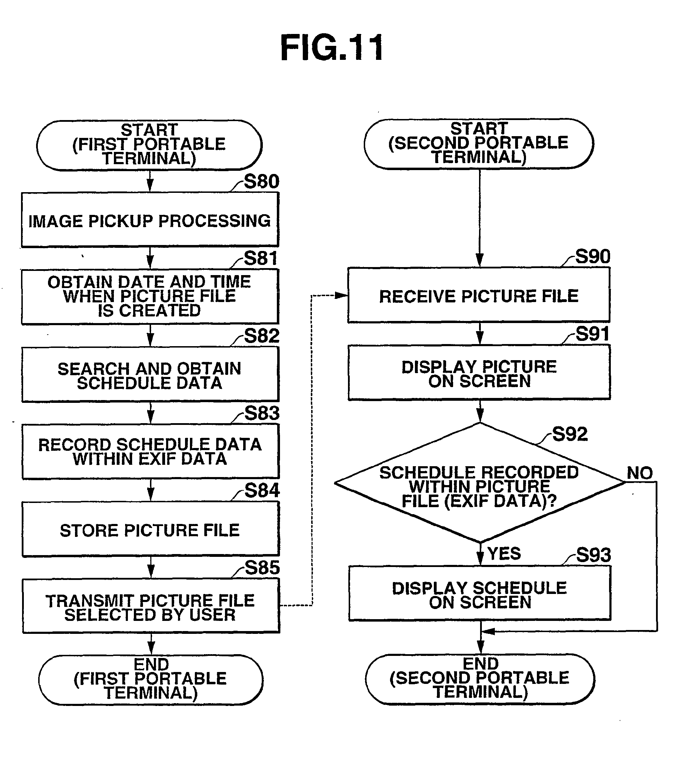

Hereunder, the contents of a processing indicated in a flowchart in FIG. 11 will be described.

First, the contents of processings to be described below (step S80 - S85) are performed by the control section 40 of the first communications terminal 1.

When an image pickup processing by the camera section 10 is performed, and a picture file of a picture picked up is created, the control section 40 temporarily stores the picture file in the temporary storage region 31 (step S80).

After step S80, the control section 40 obtains file creation date and time of the picture file from the clock section 20 (step S81), searches among the schedule data stored in the schedule storage region 32 for schedule data that matches the file creation date and time, and obtains the schedule data that matches the date and time (step S82).

The control section 40 records the schedule data obtained in the stage in step S82 as a "picture title" within EXIF data in the picture file (step S83).

Thereafter, the control section 40 causes the picture file storage region 33 to store the picture file that records the schedule data in its EXIF data (step S84).

Then, when the user selects among the image files stored in the picture file storage region 33 a picture file to be transmitted to the second communications terminal 2, and inputs a transmission instruction, the control section 40 transmits the picture file to the second communications terminal 2 (step S85).

Next, after the processing (step S85) by the first communications terminal 1 is completed, the contents of processings to be described below (steps S90 - S93) are performed by the control section 40 of the second communications terminal 2.

Upon receiving the picture file from the first communications terminal 1 (step S90), the control section 40 displays a picture thereof on the screen (step S91).

Then, the control section 40 judges whether or not schedule data is recorded within EXIF data of the picture file (step S92). When schedule data is not recorded (step S92: No), the processing by the second communications terminal 2 ends. When schedule data is recoded (step S92: Yes), the schedule data is obtained from the EXIF data, and is displayed together with the picture (step S93).

Accordingly, according to the seventh embodiment, when sending image files from a portable terminal, the user does not need to enter picture titles (character data) indicating the contents of the image files each time to add the picture titles to the image files, which is very convenient. In particular, since it is difficult to input character data on portable terminals, much higher convenience would be attained.

Also, when displaying received image files, their picture titles are automatically, simultaneously displayed. Therefore, only by the operation to display image files, what kind of pictures are being displayed may be readily and promptly confirmed.

It is noted that any of the second to fifth embodiments may be combined with the first embodiment. For example, the second and third embodiments may be combined with the first embodiment, or all of the second to fifth embodiments may be combined with the first embodiment; the embodiments may be freely combined. Also, the sixth embodiment or the seventh embodiment may be combined with any of the second to fifth embodiments. Furthermore, the first embodiment may be selectively used with the sixth embodiment or the seventh embodiment.

According to the above embodiments, when a filename is assigned to a data file such as a picture file or a folder name is assigned for storing the data file, a schedule that matches the file creation date and time of the data file is selected from among schedules registered in advance and a filename or a folder name is created based on the contents of the schedule; consequently, even when the user attempts to obtain a specific picture file from among numerous image files stored in advance, the user may refer to filenames or folder names to obtain the desired picture file without having to directly check the contents of image files. Therefore, file management is made easier and convenience is improved.

In addition, even when there are two or more types of schedules that match the file creation date and time among schedules registered in advance, since a filename or a folder name is created for each of the plurality of schedules and the user may select any of them, schedule data appropriate for each data file may be used as a filename/folder name, which is convenient.

When a character string that indicates schedule contents is too long, the user may select only a part of the entire character string desired to be used as a filename or a folder name, and create a filename or a folder name based on the part selected.

Furthermore, even if the date and time of a schedule have shifted slightly and do not match the actual file creation date and time, a filename or a folder name may be easily created based on the contents of the schedule.

When schedules related to an overseas trip are set in the local time, a time difference results with the time as clocked by the clock section 20, but the time difference may be easily corrected.

Moreover, when creating a data file, schedule data that matches with the date and time when the data file is created is automatically obtained as judging information for judging the contents of the data file, and may be added to the data file. Accordingly, after the time the data file is created, there is no need to input such judging information to be attached to the data file, which is convenient. As a consequence, the contents of files may be readily discriminated, and the operations relating to files may be facilitated.

## Claims

1. A data file storage device comprising:
clock means (20) for performing a clocking operation to indicate a current date and time;
file creation date and time acquisition means (40) for obtaining from the clock means (20), a date and time at which a data file is created, as file creation date and time of the data file; and
data file storage means (33) for storing data files in a file folder,
**characterized by**
schedule data storage means (32) for storing schedule data indicating schedule dates and times as well as contents;
file folder creation means (40) for creating a file folder in the data file storage means (33), when a predetermined data file is created, the file folder in which at least the predetermined data file is to be stored;
schedule acquisition means (40) for obtaining from among the schedule data stored in the schedule data storage means (32) schedule data whose schedule date and time includes the file creation date and time of the predetermined data file; and
folder name setting means (40) for setting a folder name of the file folder to be created in the data file storage means (33) by the file folder creation means (40), using a part or all of a character string that represents the contents of the schedule data obtained through the schedule acquisition means (40).

2. A data file storage device according to claim 1, **characterized in that** the data file storage means (33) stores data files created at a timing which is included in the date and time of the schedule data acquired by the schedule acquisition means (40), in a file folder whose folder name is set based on the schedule data.

3. A data file storage device according to claim 1 or 2, **characterized by** further comprising file name setting means (40) for setting a file name of a file which includes the folder name of the file folder, in the data file stored in the file folder.

4. A data file storage device according to claim 3, **characterized by** further comprising:
counter value output means (40) for outputting different counter values each time a data file is created, and
**characterized in that** the file name setting means (40) sets the filename of the data file based on the counter value output by the counter value output means (40).

5. A data file storage device according to any of claims 1 to 4, **characterized in that** the folder name setting means (40) obtains a designated part of the character string that indicates the contents of the schedule data obtained by the schedule acquisition means (40), and sets the folder name by using the obtained designated part of the character string.

6. A data file storage device according to any of claims 1 to 5, **characterized by** further comprising instruction input request means for requesting an instruction input regarding whether or not the character string indicating the contents of the schedule data obtained by the schedule acquisition means (40) is used as the folder name.

7. A data file storage device according to any of claims 1 to 6, **characterized by** further comprising:
selection input request means for making, when a plurality of schedule data whose dates and times include the file creation date and time are obtained by the schedule acquisition means (40), a request for a selection input regarding which of the plurality of schedule data is to be selected, and
**characterized in that** the folder name setting means (40) sets the folder name by using schedule data selected and inputted in response to the request from the selection input request means.

8. A data file storage device according to any of claims 1 to 7, **characterized in that** when the schedule dates and times indicated by the schedule data stored in the schedule data storage means (32) do not include the file creation date and time of the predetermined data file obtained by the file creation date and time acquisition means (40), the schedule acquisition means (40) obtains schedule data whose date and time is the closest to the file creation date and time.

9. A data file storage device according to any of clams 1 to 8, **characterized in that**:
when the schedule dates and times indicated by the schedule data stored in the schedule data storage means (32) do not include the file creation date and time of the predetermined data file obtained by the file creation date and time acquisition means, the schedule acquisition means (40) obtains immediately preceding schedule data whose date and time is the closest to the file creation date and time, and immediately subsequent schedule data whose date and time are after the file creation date and time and the closest to the file creation date and time; and
the folder name setting means (40) sets the folder name of the file folder to be created in the data file storage means (33) by the file folder creation means (40), using data of either the immediately preceding schedule data or the immediately subsequent schedule data.

10. A data file storage device according to any of claims 1 to 9, **characterized by** further comprising:
time difference data acquisition means (40) for obtaining time difference data for a designated geographical area; and
file creation date and time correction means (40) for correcting the file creation date and time based on the time difference data obtained by the time difference data acquisition means (40), and
**characterized in that** the schedule acquisition means (40) obtains schedule data based on the file creation date and time of the predetermined data file, which is corrected by the file creation date and time correction means (40).

11. A data file storage device according to any of claims 1 to 10, **characterized in that**:
the data file storage device comprises a digital camera provided with imaging means (10); and
the folder name setting means (40) uses a part or all of the character string indicating the contents of the schedule data obtained by the schedule acquisition means (40), to set a folder name of a file folder for storing a picture file of a picture that is picked up by the imaging means as the data file.

12. A data file storage device according to any of claims 1 to 10, **characterized in that**:
the data file storage device comprises a portable telephone provided with imaging means (10); and
the folder name setting means (40) uses a part or all of the character string indicating the contents of the schedule data obtained by the schedule acquisition means (40), to set a folder name of a file folder for storing a picture file of a picture that is picked up by the imaging means as the data file.

13. A data file storage device according to any of claims 1 to 10, **characterized in that**:
the data file storage device comprises a PDA device provided with imaging means (10); and
the folder name setting means (40) uses a part or all of the character string indicating the contents of the schedule data obtained by the schedule acquisition means (40), to set a folder name of a file folder for storing a picture file of a picture which is picked up by the imaging means as the data file.

14. A data file storage device according to any of claims 1 to 10, **characterized in that** the data file storage means (33) comprises a file server (33') connected via a network (35).

15. A data file storage device according to any of claims 1 to 10, **characterized in that** the schedule data storage means (32) comprises a schedule management storage server (32') connected via a network (35).

16. A recording medium for storing a computer program that causes a computer to carry out:
a file creation date and time acquisition function to acquire a file creation date and time of a data file; and
a data file storage function to store a plurality of data files in a file folder;
**characterized by**
a schedule data storage function to store schedule data that represents the date and time and contents of a schedule;
a file folder creation function to create a file folder for storing at least a predetermined data file, when the predetermined data file is created;
a schedule acquisition function to acquire from a plurality of schedule data stored by the schedule data storage function, schedule data whose schedule date and time includes the file creation date and time of the predetermined data file; and
a folder name setting function to use a part or all of a character string that represents the contents of the schedule data acquired by the schedule acquisition function, to set a folder name of a file folder to be created in data file storage means by the file folder creation function.

17. A data file storage method comprising;
a file creation date and time acquisition step (S13) of acquiring a file creation date and time of a data file, when the data file is newly created; and
a data file storage (S14) step of storing a plurality of data files in a file folder ;
**characterized by**
a schedule data storage step of storing schedule data that represents the date and time and contents of a schedule;
a file folder creation step (S14) of creating a file folder in which at least a predetermined data file is to be stored, when the predetermined data file is created;
a schedule acquisition step of acquiring from among the schedule data stored in the schedule data storage step, schedule data whose schedule date and time include the file creation date and time of the predetermined data file ; and
a folder name setting step of setting a folder name of the file folder created in the file folder creation step, by using a part or all of a character string that represents contents of the schedule data acquired in the schedule acquisition step.

## Patentansprüche

1. Datendatei-Speichervorrichtung, die umfasst:
eine Takteinrichtung (20) zum Durchführen eines Taktgebungsvorgangs, um ein aktuelles Datum und eine aktuelle Zeit anzuzeigen;
eine Einrichtung (40) zum Erfassen von Datum und Zeit der Erzeugung einer Datei, die von der Takteinrichtung (20) ein Datum und eine Zeit, zu der eine Datendatei erzeugt wird, als Datum und Zeit der Dateierzeugung der Datendatei ermittelt; und
eine Datendatei-Speichereinrichtung (33) zum Speichern von Datendateien in einem Dateiordner,
**gekennzeichnet durch**
eine Zeitplandaten-Speichereinrichtung (32) zum Speichern von Zeitplandaten, die Zeitplan-Datumsangaben und -Zeiten sowie Inhalte anzeigen;
eine Dateiordner-Erzeugungseinrichtung (40) zum Erzeugen eines Dateiordners in der Datendatei-Speichereinrichtung (33), wenn eine vorgegebene Datendatei erzeugt wird, wobei in dem Dateiordner wenigstens die vorgegebene Datendatei zu speichern ist;
eine Zeitplan-Erfassungseinrichtung (40), die aus den in der Zeitplandaten-Speichereinrichtung (32) gespeicherten Zeitplandaten Zeitplandaten ermittelt, deren Zeitplan-Datum und -Zeit das Datum und die Zeit der Dateierzeugung der vorgegebenen Datendatei enthalten; und
eine Einrichtung (40) zum Festlegen eines Ordnernamens, der einen Ordnernamen des in der Datendatei-Speichereinrichtung (33) **durch** die Dateiordner-Erzeugungseinrichtung (40) zu erzeugenden Dateiordners unter Verwendung eines Teils oder der Gesamtheit einer Zeichenfolge festlegt, die den Inhalt der über die Zeitplan-Erfassungseinrichtung (40) ermittelten Zeitplandaten darstellt.

2. Datendatei-Speichervorrichtung nach Anspruch 1,
**dadurch gekennzeichnet, dass**
die Datendatei-Speichervorrichtung (33) Datendateien, die zu einem Zeitpunkt erzeugt werden, der in dem durch die Zeitplan-Erfassungseinrichtung (40) erfassten Datum und der Zeit der Zeitplandaten enthalten ist, in einem Dateiordner speichert, dessen Name auf Basis der Zeitplandaten festgelegt wird.

3. Datendatei-Speichervorrichtung nach Anspruch 1 oder 2,
**dadurch gekennzeichnet, dass**
sie des Weiteren eine Dateinamen-Festlegeeinrichtung (40) umfasst, die einen Dateinamen einer Datei, der den Ordnernamen des Dateiordners einschließt, in der in dem Dateiordner gespeicherten Datendatei festlegt.

4. Datendatei-Speichervorrichtung nach Anspruch 3,
**dadurch gekennzeichnet, dass**
sie des Weiteren umfasst:
eine Zählerwert-Ausgabeeinrichtung (40), die jedes Mal, wenn eine Datendatei erzeugt wird, verschiedene Zählerwerte ausgibt, und
**dadurch gekennzeichnet, dass**
die Datei-Festlegeeinrichtung (40) den Dateinamen der Datendatei auf Basis des durch die Zählerwert-Ausgabeeinrichtung (40) ausgegebenen Zählerwertes festlegt.

5. Datendatei-Speichervorrichtung nach einem der Ansprüche 1 bis 4,
**dadurch gekennzeichnet, dass**
die Ordnernamen-Festlegeeinrichtung (40) einen angegebenen Teil der Zeichenfolge ermittelt, die den Inhalt der durch die Zeitplan-Erfassungseinrichtung (40) ermittelten Zeitplandaten anzeigt, und den Ordnernamen unter Verwendung des ermittelten angegebenen Teils der Zeichenfolge festlegt.

6. Datendatei-Speichervorrichtung nach einem der Ansprüche 1 bis 5,
**dadurch gekennzeichnet, dass**
sie des Weiteren eine Befehlseingabe-Anforderungseinrichtung umfasst, die eine Befehlseingabe dahingehend anfordert, ob die Zeichenfolge, die den Inhalt durch die der Zeitplan-Erfassungseinrichtung (40) ermittelten Zeitplandaten anzeigt, als der Ordnername verwendet wird oder nicht.

7. Datendatei-Speichervorrichtung nach einem der Ansprüche 1 bis 6,
**dadurch gekennzeichnet, dass**
sie des Weiteren umfasst:
eine Auswahleingabe-Anforderungseinrichtung, die, wenn eine Vielzahl von Zeitplandaten, deren Datumsangaben und Zeiten das Datum und die Zeit der Dateierzeugung einschließen, durch die Zeitplan-Erfassungseinrichtung (40) ermittelt werden, eine Anforderung einer Auswahleingabe dahingehend stellt, welche der Vielzahl von Zeitplandaten auszuwählen sind, und
**dadurch gekennzeichnet, dass**
die Ordnernamen-Festlegeeinrichtung (40) den Ordnernamen unter Verwendung der ausgewählten und in Reaktion auf die Anforderung von der Auswahleingabe-Anforderungseinrichtung eingegebenen Zeitplandaten festlegt.

8. Datendatel-Speichervorrichtung nach einem der Ansprüche 1 bis 7,
**dadurch gekennzeichnet, dass**, wenn die Zeitplan-Datumsangaben und -Zeiten, die durch die in der Zeitplandaten-Speichereinrichtung (32) gespeicherten Zeitplandaten angezeigt werden, Datum und Zeit der Dateierzeugung der vorgegebenen Datendatei, die durch die Einrichtung (40) zum Erfassen von Datum und Zeit der Dateierzeugung ermittelt werden, nicht enthält, die Zeitplan-Erfassungseinrichtung (40) Zeitplandaten ermittelt, deren Datum und Zeit am nächsten an dem Datum und der Zeit der Dateierzeugung liegen.

9. Datendatei-Speichervorrichtung nach einem der Ansprüche 1 bis 8,
**dadurch gekennzeichnet, dass**
wenn die Zeitplan-Datumsangaben und -Zeiten, die durch die in der Zeitplandaten-Speichereinrichtung (32) gespeicherten Zeitplandaten angezeigt werden, das Datum und die Zeit der Dateierzeugung der vorgegeben Datendatei, die durch die Einrichtung zum Erfassen von Datum und Zeit der Dateierzeugung ermittelt werden, nicht enthalten, die Zeitplan-Erfassungseinrichtung (40) unmittelbar vorangehende Zeitplandaten, deren Datum und Zeit am nächsten an dem Datum und der Zeit der Dateierzeugung liegen, und unmittelbar darauffolgende Zeitplandaten ermittelt, deren Datum und Zeit nach dem Datum und der Zeit der Dateierzeugung und am nächsten an dem Datum und der Zeit der Dateierzeugung liegen; und
die Ordnernamen-Festlegeeinrichtung (40) den Ordnernamen des Dateiordners, der durch die Dateiordner-Erzeugungseinrichtung (40) in der Datendatei-Speichereinrichtung (33) zu erzeugen ist, unter Verwendung von Daten entweder der unmittelbar vorangehenden oder der unmittelbar folgenden Zeitplandaten festlegt.

10. Datendatei-Speichervorrichtung nach einem der Ansprüche 1 bis 9,
**dadurch gekennzeichnet, dass**
sie des Weiteren umfasst:
eine Einrichtung (40) zum Erfassen von Zeitdifferenzdaten, die Zeitdifferenzdaten für ein angegebenes geografisches Gebiet ermittelt; und
eine Einrichtung (40) zum Korrigieren des Datums und der Zeit der Dateierzeugung, die das Datum und die Zeit der Dateierzeugung auf Basis der durch die Einrichtung (40) zum Erfassen von Zeitdifferenzdaten ermittelten Zeitdifferenzdaten korrigiert, und
**dadurch gekennzeichnet, dass**
die Zeitplan-Erfassungseinrichtung (40) Zeitplandaten auf Basis von durch die Einrichtung (40) zum Korrigieren von Datum und Zeit der Dateierzeugung korrigiertem Datum und Zeit der Dateierzeugung der vorgegebenen Datendatei ermittelt.

11. Datendatei-Speichervorrichtung nach einem der Ansprüche 1 bis 10,
**dadurch gekennzeichnet, dass**:
die Datendatei-Speichervorrichtung eine Digitalkamera umfasst, die mit einer Bilderzeugungseinrichtung (10) versehen ist; und
die Ordnernamen-Festlegeeinrichtung (40) einen Teil oder die Gesamtheit der Zeichenfolge verwendet, die den Inhalt der durch die Zeitplan-Erfassungseinrichtung (40) ermittelten Zeitplandaten anzeigt, um einen Ordnernamen eines Dateiordners zum Speichern einer Bilddatei eines Bildes, das durch die Bilderzeugungseinrichtung aufgenommen wird, als die Datendatei festzulegen.

12. Datendatei-Speichervorrichtung nach einem der Ansprüche 1 bis 10,
**dadurch gekennzeichnet, dass**:
die Datendatei-Speichervorrichtung ein Mobiltelephon umfasst, das mit einer Bilderzeugungseinrichtung (10) versehen ist; und
die Ordnernamen-Festlegeeinrichtung (40) einen Teil oder die Gesamtheit der Zeichenfolge verwendet, die den Inhalt der durch die Zeitplan-Erfassungseinrichtung (40) ermittelten Zeitplandaten anzeigt, um einen Ordnernamen eines Dateiordners zum Speichern einer Bilddatei eines Bildes, das durch die Bilderzeugungseinrichtung aufgenommen wird, als die Datendatei festzulegen.

13. Datendatei-Speichervorrichtung nach einem der Ansprüche 1 bis 10,
**dadurch gekennzeichnet, dass**:
die Datendatei-Speichervorrichtung eine PDA-Vorrichtung umfasst, die mit einer Bilderzeugungseinrichtung (10) versehen ist; und
die Ordnernamen-Einstelleinrichtung (40) einen Teil oder die Gesamtheit der Zeichenfolge verwendet, die den Inhalt der durch die Zeitplan-Erfassungseinrichtung (40) ermittelten Zeitplandaten anzeigt, um einen Ordnernamen eines Dateiordners zum Speichern einer Bilddatei eines Bildes, das durch die Bilderzeugungseinrichtung aufgenommen wird, als die Datendatei festzulegen.

14. Datendatei-Speichervorrichtung nach einem der Ansprüche 1 bis 10,
**dadurch gekennzeichnet, dass**
die Datendatei-Speichereinrichtung (33) einen Datei-Server (33') umfasst, der über ein Netzwerk (35) verbunden ist.

15. Datendatei-Speichervorrichtung nach einem der Ansprüche 1 bis 10,
**dadurch gekennzeichnet, dass**
die Zeitplandaten-Speichereinrichtung (32) einen Zeitplanverwaltungs-Speicher-Server (32') umfasst, der über ein Netzwerk (35) verbunden ist.

16. Aufzeichnungsmedium zum Aufzeichnen eines Computerprogramms, das einen Computer veranlasst, Folgendes auszuführen:
eine Funktion zum Erfassen von Datum und Zeit der Erzeugung einer Datei, um Datum und Zeit der Erzeugung einer Datendatei zu erfassen; und
eine Datendatei-Speicherfunktion zum Speichern einer Vielzahl von Datendateien in einem Dateiordner;
**gekennzeichnet durch**:
eine Zeitplandaten-Speicherfunktion zum Speichern von Zeitplandaten, die das Datum und die Zeit sowie den Inhalt eines Zeitplans darstellen;
eine Dateiordner-Erzeugungsfunktion zum Erzeugen eines Dateiordners zum Speichern wenigstens einer vorgegebenen Datendatei, wenn die vorgegebene Datendatei erzeugt wird;
eine Zeitplan-Erfassungsfunktion zum Erfassen von Zeitplandaten, deren Zeitplan-Datum und -Zeit das Datum und die Zeit der Dateierzeugung der vorgegebenen Datendatei enthalten, von einer Vielzahl von **durch** die Zeitplandaten-Speicherfunktion gespeicherten Zeitplandaten; und
eine Ordnernamen-Festlegefunktion, die einen Teil oder die Gesamtheit einer Zeichenfolge, die den Inhalt der **durch** die Zeitplan-Erfassungsfunktion erfassten Zeitplandaten darstellt, verwendet, um einen Ordnernamen eines in der Datendatei-Speichereinrichtung **durch** die Dateiordner-Erzeugungsfunktion zu erzeugenden Dateiordners festzulegen.

17. Datendatei-Speicherverfahren, das umfasst:
einen Schritt (S13) zum Erfassen von Datum und Zeit einer Dateierzeugung, mit dem Datum und Zeit der Dateierzeugung einer Datendatei erfasst werden, wenn die Datendatei neu erzeugt wird; und
einen Schritt (S14) zum Speichern einer Datendatei, mit dem eine Vielzahl von Datendateien in einem Dateiordner gespeichert werden;
**gekennzeichnet durch**:
einen Zeitplandaten-Speicherschritt mit dem Zeitplandaten, die das Datum und die Zeit sowie den Inhalt eines Zeitplans darstellen, gespeichert werden;
einen Dateiordner-Erzeugungsschritt (S14), mit dem ein Dateiordner erzeugt wird, in dem wenigstens eine vorgegebene Datendatei zu speichern ist, wenn die vorgegebene Datendatei erzeugt wird;
einen Zeitplan-Erfassungsschritt, mit dem aus den in dem Zeitplandaten-Speicherschritt gespeicherten Zeitplandaten Zeitplandaten erfasst werden, deren Zeitplan-Datum und -Zeit das Datum und die Zeit der Dateierzeugung der vorgegebenen Datendatei enthalten; und
einen Ordnernamen-Festlegeschritt des Festlegens eines Ordnernamens des in dem Dateiordner-Erzeugungsschritt erzeugten Dateiordners unter Verwendung eines Teils oder der Gesamtheit einer Zeichenfolge, die Inhalt der in dem Zeitplan-Erfassungsschritt erfassten Zeitplandaten darstellt.

## Revendications

1. Dispositif de stockage de fichier de données comprenant :
un moyen d'horloge (20) destiné à effectuer une opération de synchronisation fin d'indiquer une date et une heure actuelles ;
un moyen d'acquisition de date et d'heure de création de fichier (40) destiné à obtenir, auprès du moyen d'horloge (20), une date et une heure auxquelles un fichier de données est créé, en tant que date et heure de création de fichier du fichier de données ; et
un moyen de stockage de fichier de données (33) destiné à stocker des fichiers de données dans un dossier de fichiers,
**caractérisé par**
un moyen de stockage de données de programme (32) destiné à stocker des données de programme indiquant des dates et des heures de programme, ainsi que des contenus ;
un moyen de création de dossier de fichiers (40) destiné à créer un dossier de fichiers dans le moyen de stockage de fichier de données (33), lorsqu'un fichier de données prédéterminé est créé, le dossier de fichiers étant celui dans lequel au moins le fichier de données prédéterminé doit être stocké ;
un moyen d'acquisition de programme (40) destiné à obtenir, parmi les données de programme stockées dans le moyen de stockage de données de programme (32), des données de programme dont la date et l'heure de programme comprennent la date et l'heure de création de fichier du fichier de données prédéterminé ; et
un moyen de définition de nom de dossier (40) destiné à définir un nom de dossier dans le dossier de fichiers devant être créé dans le moyen de stockage de fichier de données (33) par le moyen de création de dossier de fichiers (40), en utilisant tout ou partie d'un chaîne de caractères qui représente le contenu des données de programme obtenues par le biais du moyen d'acquisition de programme (40).

2. Dispositif de stockage de fichier de données selon la revendication 1, **caractérisé en ce que** le moyen de stockage de fichier de données (33) stocke des fichiers de données créés à un moment qui est inclus dans la date et l'heure des données de programme acquises par le moyen d'acquisition de programme (40), dans un dossier de fichiers dont le nom est basé sur les données de programme.

3. Dispositif de stockage de fichier de données selon la revendication 1 ou 2, **caractérisé en ce qu'**il comprend en outre un moyen de définition de nom de fichier (40) destiné à définir un nom de fichier d'un fichier qui comprend le nom de dossier du dossier de fichiers, dans le fichier de données stocké dans le dossier de fichiers.

4. Dispositif de stockage de fichier de données selon la revendication 3, **caractérisé en ce qu'**il comprend en outre :
un moyen de sortie de valeur de compteur (40) destiné à fournir des valeurs de compteur différentes à chaque fois qu'un fichier de données est créé, et
**caractérisé en ce que** le moyen de définition de nom de fichier (40) définit le nom de fichier du fichier de données sur la base de la valeur de compteur transmise par le moyen de sortie de valeur de compteur (40).

5. Dispositif de stockage de fichier de données selon l'une quelconque des revendications 1 à 4, **caractérisé en ce que** le moyen de définition de nom de dossier (40) obtient une partie désignée de la chaîne de caractères qui indique le contenu des données de programme obtenues par le moyen d'acquisition de programme (40), et définit le nom de dossier en utilisant la partie désignée obtenue de la chaîne de caractères.

6. Dispositif de stockage de fichier de données selon l'une quelconque des revendications 1 à 5, **caractérisé en ce qu'**il comprend en outre un moyen de demande d'instruction destiné à demander une instruction relative au fait que la chaîne de caractères indiquant le contenu des données de programme obtenues par le moyen d'acquisition de programme (40) soit utilisée ou non comme nom de dossier.

7. Dispositif de stockage de fichier de données selon l'une quelconque des revendications 1 à 6, **caractérisé en ce qu'**il comprend en outre :
un moyen de demande de sélection destinée à effectuer, lorsqu'une pluralité de données de programme dont les dates et les heures comprennent la date et l'heure de création de fichier est obtenue par le moyen d'acquisition de programme (40), une demande de sélection relative aux données de programme qui doivent être sélectionnées, et
**caractérisé en ce que** le moyen de définition de nom de dossier (40) définit le nom de dossier en utilisant les données de programme sélectionnées et transmises en réponse à la demande émanant du moyen de demande de sélection.

8. Dispositif de stockage de fichier de données selon l'une quelconque des revendications 1 à 7, **caractérisé en ce que**, lorsque les dates et les heures de programme indiquées par les données de programme stockées dans le moyen de stockage de données de programme (32) ne comprennent pas la date et l'heure de création de fichier du fichier de données prédéterminé obtenues par le moyen d'acquisition de date et d'heure de création de fichier (40), le moyen d'acquisition de programme (40) obtient des données de programme dont la date et l'heure sont les plus proches de la date et de l'heure de création du fichier.

9. Dispositif de stockage de fichier de données selon l'une quelconque des revendications 1 à 8, **caractérisé en ce que** :
lorsque les dates et les heures de programme indiquées par les données de programme stockées dans le moyen de stockage de données de programme (32) ne comprennent pas la date et l'heure de création du fichier de données prédéterminées obtenues par le moyen d'acquisition de date et d'heure de création de fichier, le moyen d'acquisition de programme (40) obtient des données de programme immédiatement précédentes dont la date et l'heure sont les plus proches de la date et de l'heure de création du fichier, et des données de programme immédiatement suivantes dont la date et l'heure sont postérieures à la date et à l'heure de création de fichier et sont les plus proches de la date et de l'heure de création du fichier ; et
le moyen de définition de nom de dossier (40) définit le nom de dossier du dossier de fichiers devant être créé dans le moyen de stockage de fichier de données (33) par le moyen de création de dossier de fichiers (40), en utilisant les données des données de programme immédiatement précédentes ou des données de programme immédiatement suivantes.

10. Dispositif de stockage de fichier de données selon l'une quelconque des revendications 1 à 9, **caractérisé en ce qu'**il comprend en outre :
un moyen d'acquisition de données de différence dans le temps (40) destiné à obtenir des données de différence dans le temps pour une zone géographique désignée ; et
un moyen de correction de date et d'heure de création de fichier (40) destiné à corriger la date et l'heure de création du fichier sur la base des données de différence dans le temps obtenues par le moyen d'acquisition de données de différence dans le temps (40), et
**caractérisé en ce que** le moyen d'acquisition de programme (40) obtient des données de programme sur la base de la date et de l'heure de création du fichier de données prédéterminé, qui sont corrigées par le moyen de correction de la date et de l'heure de création du fichier (40).

11. Dispositif de stockage de fichier de données selon l'une quelconque des revendications 1 à 10, **caractérisé en ce que** :
le dispositif de stockage de fichier de données comprend une caméra numérique munie d'un moyen d'imagerie (10) ; et
le moyen de définition de nom de dossier (40) utilise une partie de la chaîne de caractères indiquant le contenu des données de programme obtenues par le moyen d'acquisition de programme (40), afin de définir un nom de dossier d'un dossier de fichiers destiné à stocker un fichier d'image d'une image qui est prise par le moyen d'imagerie en tant que fichier de données.

12. Dispositif de stockage de fichier de données selon l'une quelconque des revendications 1 à 10, **caractérisé en ce que** :
le dispositif de stockage de fichier de données comprend un téléphone portable muni d'un moyen d'imagerie (10) ; et
le moyen de définition de nom de dossier (40) utilise une partie de la chaîne de caractères indiquant le contenu des données de programme obtenues par le moyen d'acquisition de programme (40), afin de définir un nom de dossier d'un dossier de fichiers destiné à stocker un fichier d'image d'une image qui est prise par le moyen d'imagerie en tant que fichier de données.

13. Dispositif de stockage de fichier de données selon l'une quelconque des revendications 1 à 10, **caractérisé en ce que** :
le dispositif de stockage de fichier de données comprend un PDA muni d'un moyen d'imagerie (10) ; et
le moyen de définition de nom de dossier (40) utilise tout ou partie de la chaîne de caractères indiquant le contenu des données de programme obtenues par le moyen d'acquisition de programme (40), afin de définir un nom de dossier d'un dossier de fichiers destiné à stocker un fichier d'image d'une image qui est prise par le moyen d'imagerie en tant que fichier de données.

14. Dispositif de stockage de fichier de données selon l'une quelconque des revendications 1 à 10, **caractérisé en ce que** le moyen de stockage de fichier de données (33) comprend un serveur de fichiers (33') relié via un réseau (35).

15. Dispositif de stockage de fichier de données selon l'une quelconque des revendications 1 à 10, **caractérisé en ce que** le moyen de stockage de données de programme (32) comprend un serveur de stockage de gestion de programme (32') relié via un réseau (35).

16. Support d'enregistrement destiné à stocker un programme informatique qui provoque le fait qu'un ordinateur exécute :
une fonction d'acquisition de la date et de l'heure de création d'un fichier, permettant d'acquérir une date et une heure de création d'un fichier de données ; et
une fonction de stockage de fichier de données permettant de stocker une pluralité de fichiers de données dans un dossier de fichiers ;
**caractérisé par**
une fonction de stockage de données de programme permettant de stocker des données de programme qui représentent la date et l'heure et le contenu d'un programme
une fonction de création de dossier de fichiers permettant de créer un dossier de fichiers destiné à stocker au moins un fichier de données prédéterminé lorsque le fichier de données prédéterminé est créé ;
une fonction d'acquisition de programme permettant d'acquérir, à partir d'une pluralité de données de programme stockées par la fonction de stockage de données de programme, des données de programme dont la date et l'heure comprennent la date et l'heure de création du fichier de données prédéterminé ; et
une fonction de définition de nom de dossier utilisant tout ou partie d'une chaîne de caractères qui représente le contenu des données de programme acquises par la fonction d'acquisition de programme, de façon à définir un nom de dossier d'un dossier de fichiers devant être créé dans le moyen de stockage de fichier de données par la fonction de création de dossier de fichiers.

17. Procédé de stockage de fichier de données comprenant :
une étape d'acquisition de la date et de l'heure de création d'un fichier (S13) consistant à acquérir une date et une heure de création d'un fichier de données, lorsque le fichier de données vient d'être créé ; et
une étape de stockage de fichier de données (S14) consistant à stocker une pluralité de fichiers de données dans un dossier de fichiers;
**caractérisé par**
une étape de stockage de données de programme consistant à stocker des données de programme qui représentent la date et l'heure et le contenu d'un programme ;
une étape de création de dossier de fichiers (S14) consistant à créer un dossier de fichiers dans lequel au moins un fichier de données prédéterminé doit être stocké, lorsque le fichier de données prédéterminé est créé ;
une étape d'acquisition de programme consistant à acquérir, à partir des données de programme stockées à l'étape de stockage de données de programme, des données de programme dont la date et l'heure comprennent la date et l'heure de création du fichier de données prédéterminé ; et
une étape de définition de nom de dossier consistant à définir un nom de dossier du dossier de fichiers créé à l'étape de création de dossier de fichiers, en utilisant tout ou partie d'une chaîne de caractères qui représente le contenu des données de programme acquises à l'étape d'acquisition de programme.
